# EUROPÄISCHE PATENTSCHRIFT

(11) **EP 0 767 712 B1**
(45) Veröffentlichungstag und Bekanntmachung des Hinweises auf die Patenterteilung: **06.05.1999**
(21) Anmeldenummer: 96904779.4
(22) Anmeldetag: 14.02.1996
(51) Int. Cl.: B21D 26/02, B23P 15/00

(54) **VERFAHREN ZUM HERSTELLEN EINES IM WESENTLICHEN ALLSEITIG GESCHLOSSENEN IM WESENTLICHEN ROHRFÖRMIGEN GEHÄUSES**
PROCESS FOR PRODUCING AN ESSENTIALLY TUBULAR HOUSING SUBSTANTIALLY CLOSED ON ALL SIDES
PROCEDE DE PRODUCTION D'UN CORPS SENSIBLEMENT TUBULAIRE SENSIBLEMENT FERME DE TOUS COTES

(30) Priorität: 05.04.1995 DE 19512657
(43) Veröffentlichungstag der Anmeldung: 16.04.1997
(73) Patentinhaber: Babcock Sempell Aktiengesellschaft, 41352 Korschenbroich (DE)
(72) Erfinder: DÖRNER, Erhard, D-41238 Mönchengladbach (DE); VIETEN, Wilhelm, D-41844 Wegberg (DE)
(74) Vertreter: Ostertag, Reinhard
(86) Internationale Anmeldenummer: EP9600637
(87) Internationale Veröffentlichungsnummer: WO9631300

(56) Entgegenhaltungen:
- DE-A- 3 923 358
- DE-A- 4 201 730
- US-A- 4 840 053
- US-A- 5 392 516

## Beschreibung

Die Erfindung betrifft ein Verfahren zum Herstellen eines im wesentlichen allseitig geschlossenen, im wesentlichen rohrförmigen Gehäuses, insbesondere eines Ventilgehäuses, welches mindestens zwei lösbar miteinander verbundene Gehäuseteile aufweist.

Bei der Herstellung derartiger Gehäuse, die im Falle von Ventilgehäusen druckdicht sein müssen, werden normalerweise die beiden Gehäuseteile getrennt aus Rohlingen hergestellt, z.B. Gußteilen, die dann durch mechanische Bearbeitung mit den notwendigen Verbindungsmitteln versehen werden, um die Gehäuseteile nach Einbau der Innereien des Ventiles druckmitteldicht miteinander verbinden zu können.

Derartige Gehäuse tragen zwar hohen Qualitätsansprüchen Rechnung, sind aber in der Herstellung teuer. Für in großen Stückzahlen gefertigte Ventile wäre es wünschenswert, die Ventilgehäuse preiswerter herstellen zu können, ohne bezüglich der Sicherheit der Verbindung der Gehäuseteile Kompromisse zu machen.

Zur Lösung der vorgenannten Aufgabe wird durch die Erfindung ein Verfahren mit den im Anspruch 1 angegebenen Merkmalen geschaffen.

Bei dem erfindungsgemäßen Verfahren dient zum Herstellen der Gehäusekontur das an sich bekannte Innenhochdruck-Umformverfahren. Mit diesem Verfahren kann man auch verhältnismäßig komplizierte Abweichungen von der exakt rohrförmigen Grundgeometrie des Gehäuses preisgünstig und unter konstanter Wandstärke herstellen. Da die Formgestaltung durch Fließen von Material und nicht spanend erfolgt, hat das Gehäuse gute mechanische Festigkeit.

Vorteilhafte Weiterbildungen der Erfindung sind in Unteransprüchen angegeben.

Die Weiterbildung der Erfindung gemäß Anspruch 2 ermöglicht es, die Verbindungsabschnitte der beiden Gehäuseteile in axialer Richtung überlappen zu lassen, was im Hinblick auf eine einfache mechanisch belastbare und strömungsmitteldichte Verbindung der beiden Gehäuseteile von Vorteil ist.

Vorzugsweise erfolgt das Verbinden der beiden Gehäuseteile durch eine Gewindeverbindung, welche sich mit dem im Anspruch 3 angegebenen Verfahren einfach herstellen läßt.

Nachstehend wird die Erfindung anhand eines Ausführungsbeispieles unter Bezugnahme auf die Zeichnung näher erläutert. In dieser zeigen:
- Figur 1:: einen axialen Schnitt durch ein Zwischenprodukt, welches bei der Herstellung eines zweiteiligen Ventilgehäuses Verwendung findet;

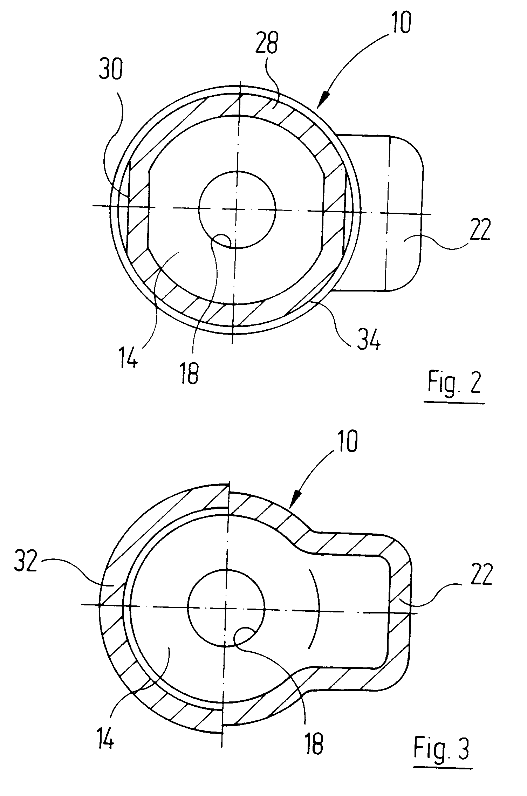

- Figur 2:: einen transversalen Schnitt durch das Zwischenprodukt nach Figur 1 längs der dortigen Schnittlinie II - II;
- Figur 3:: einen abgewinkelten transversalen Schnitt durch das Zwischenprodukt nach Figur 1 längs der dortigen Schnittlinie III - III; und
- Figur 4:: eine ähnliche Ansicht wie Figur 1, in welcher jedoch die beiden Gehäuseteile des Ventilgehäuses nach Zerschneiden des Zwischenproduktes von Figur 1 und nach geringfügiger mechanischer Endbearbeitung wiedergegeben sind.

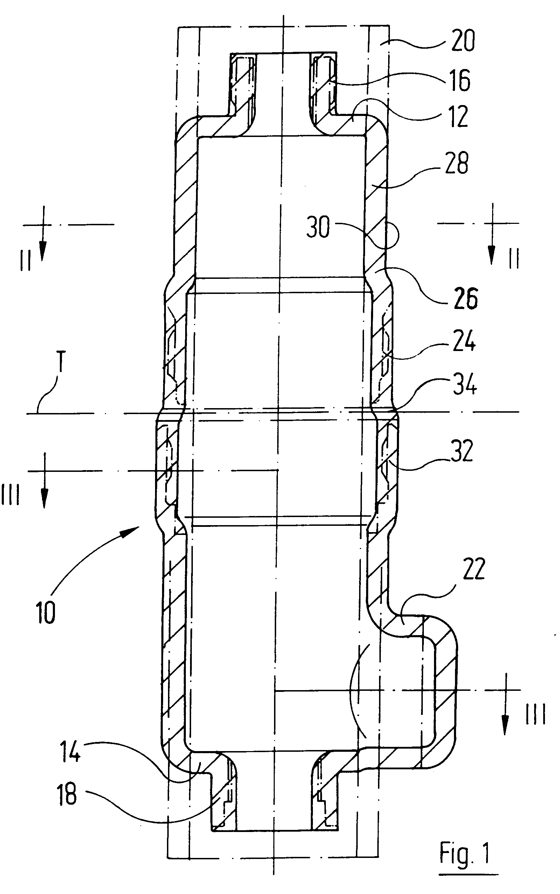

In Figur 1 ist bei 10 insgesamt ein Zwischenprodukt gezeigt, welches später zur Herstellung von zwei verschraubbaren Gehäuseteilen eines Ventilgehäuses bei einer Trennebene T durchgeschnitten wird. Das Zwischenprodukt 10 hat zwei Stirnwände 12, 14, die jeweils einen Stutzen 16 bzw. 18 tragen.

Am unteren Ende des Zwischenproduktes 10 ist in der Nachbarschaft des Stutzens 18, der später den Einlaßstutzen des Ventilgehäuses darstellt, ein tranversaler Stutzen 22 angeformt, der später den Auslaßstutzen des Ventilgehäuses darstellt.

Das Zwischenprodukt 10 ist aus einem in Figur 1 gestrichelt angedeuteten zylindrischen Rohling 20 nach dem Innenhochdruck-Umformverfahren hergestellt.

Oberhalb der mit T bezeichneten Trennfläche ist ein Verbindungsabschnitt 24 radial nach außen gedrückt, welcher über einen Schulterabschnitt 26 mit einem oberen Umfangswandabschnitt 28 in Verbindung steht, an welchem Abplattungen 30 vorgesehen sind, an denen ein Schraubenschlüssel angesetzt werden kann.

Unterhalb der Trennfläche T ist im Zwischenprodukt 20 ein weiterer Verbindungsabschnitt 32 vorgesehen, der größeren Durchmesser aufweist als der Verbindungsabschnitt 24 und mit diesem über einen Schulterabschnitt 34 verbunden ist.

Der Durchmesser des hülsenförmigen Rohlinges 20 ist so gewählt, daß er dem des kleinsten Durchmesser aufweisenden Abschnitt der Umfangswand des Zwischenproduktes 10 entspricht oder kleiner ist als dieser. Durch Innenhochdruck-Umformung (Verschließen der offenen Enden des Rohlinges 20 und Beaufschlagung des so geschlossenen Innenraumes des Rohlinges 20 mit hohem Druck) werden dann die Ecken der Abplattungen 30, der Verbindungsabschnitt 24, der Verbindungsabschnitt 32 und der transversale Stutzen 22 erzeugt, indem sich die Wand des Rohlinges 20 gegen die entsprechend konturierte Innenfläche einer Innenhochdruck-Umformform anlegen. Auf die Endabschnitte des so konturierten Rohlinges wird dann unter Verwendung von Roll-Drückwerkzeugen eine radial nach innen gerichtete Kraft ausgeübt, wobei diese axialen Endabschnitte zugleich mit einer axialen Kraft beaufschlagt werden. Auf diese Weise wird Material zur Bildung der Stirnwände 12, 14 umgelegt und man hält die kleinen Durchmesser aufweisenden Stutzen 16, 18.

Das Zwischenprodukt 10 wird somit in einem zweistufigen Verfahren erhalten, welches als ersten Schritt eine Innenhochdruck-Umformung eines zylindrischen Rohlinges und als zweiten Schritt eine Drück-Umformung der Endabschnitte des nach der Innenhockdruck-Umformung erhaltenen ersten Zwischenproduktes umfaßt.

Ein derartiges zweistufiges Verfahren des Zwischenproduktes 10 wird bevorzugt angewendet, wenn die Wandstärke des Zwischenproduktes 10 groß sein soll. Beim hier betrachteten Ausführungsbeispiel, bei welchem das Zwischenprodukt 10 zur Herstellung eines zweiteiligen Gehäuses für ein Sicherheitsventil dienen soll, beträgt die Wandstärke im Zwischenprodukt 10 etwa 5 mm. Dadurch, daß man für das Herstellen der Stutzen 16, 18 einen Drückvorgang wählt, braucht man zur Herstellung der radial außerhalb des Rohlinges 20 liegenden Abschnitte des Zwischenproduktes 10 keine zu starken radialen Aufweitungen vorzunehmen, die die Gefahr einer stärkeren Wandstärkeverminderung mit sich bringen können, auch wenn in axiqaler Richtung Material nachgeschoben wird.

In Abwandlung kann man in solchen Fällen, in denen die Wandstärke des Zwischenproduktes kleiner ist und die Konstanz der Wandstärke weniger kritisch ist, von einem Rohling 20 ausgehen, dessen Durchmesser dem Durchmesser der Stutzen 16, 18 entspricht. In diesem Falle kann man dann die gesamte Umformung des Rohlinges in das Zwischenprodukt 10 mit dem Innenhochdruck-Umformverfahren durchführen.

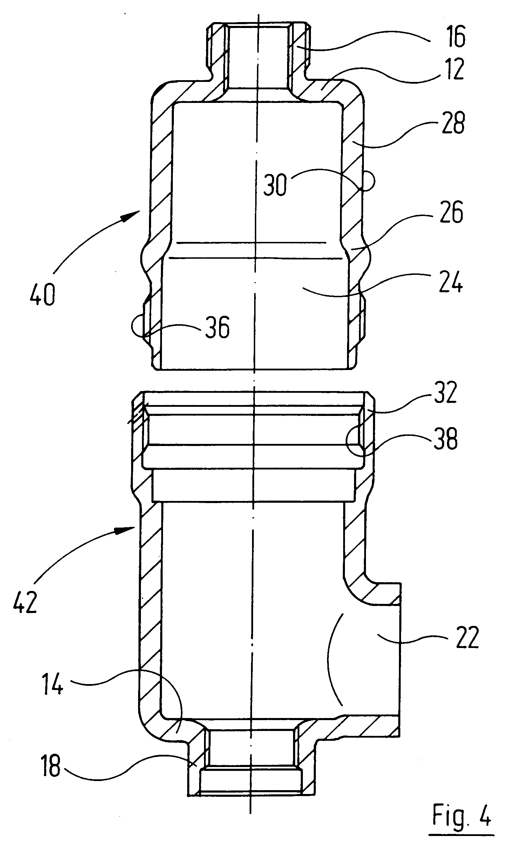

Um aus dem in Figur 1 gezeigten Zwischenprodukt 10 ein zweiteiliges rohrförmiges Ventilgehäuse herzustellen, wird das Zwischenprodukt 10 bei der Trennfläche T durchgeschnitten, wobei der Schulterabschnitt 34 vollständig entfernt wird. Anschließend wird auf die Außenseite des Verbindungsabschnittes 24 ein Gewinde 36 geschnitten, welches in Figur 4 wiedergegeben ist. Ferner wird in die Innenfläche des Verbindungsabschnittes 32 ein Gewinde 38 geschnitten, welches zum Gewinde 36 paßt.

Der Durchmesserunterschied zwischen den Verbindungsabschnitten 24 und 32 ist gerade so gewählt, daß die freiliegenden Spitzen der Gewindegänge nur um eine kleine Strecke hinter der Oberfläche des betrachteten Verbindungsabschnittes liegt, so daß man das Gewinde mit geringem Materialabtrag herstellen kann, andererseits gewährleistet ist, daß bis zu den Spitzen der Gewindegänge ausreichend Material zur Verfügung steht.

Weitere mechanische Bearbeitungsschritte in den durch Zerschneiden des Zwischenproduktes 10 erhaltenen Gehäuseteilen 40 und 42 des Ventilgehäuses bestehen im Anbringen eines Innengewindes und eines Außengewindes am Stutzens 16 sowie eines Innengewindes am Stutzen 18 und im Öffnen des Stutzens 22, der später den Auslaß des Ventilgehäuses darstellt, sowie einer Ausdrehung am unteren Ende des Verbindungsabschnittes 32.

Die Gewinde und Ausdrehungen sind in Figur 1 gestrichelt angedeutet.

Nach Fertigstellung der Gehäuseteile 40 und 42 wird in das Innere des Gehäuseteiles 42 ein Ventilsitz eingebaut, anschließend wird in das Gehäuseteil 40 das Ventilverschlußteil und die ihm zugeordnete Stellmechanik eingebaut. Anschließend werden die beiden Gehäuseteile 40 und 42 miteinander verschraubt.

Man erkennt, daß das oben beschriebene Ventilgehäuse insgesamt sehr kostengünstig herstellbar ist, trotzdem keine mechanischen Schwachstellen aufweist. Die beiden Gehäuseteile sind einfach und sicher miteinander zu verbinden.

Für noch stärkeren Drucken ausgesetzte Ventilgehäuse werden Wandstärken des Rohlinges 20 bis zu 25 mm in Betracht gezogen. Für nur kleinen Drucken ausgesetzte Ventilgehäuse kann die Wandstärke des Rohlinges bis auf 3 mm vermindert werden. Bevorzugte Wandstärken liegen für normale Sicherheitsventilgehäuse im Bereich von 5 bis 7 mm.

## Patentansprüche

1. Verfahren zum Herstellen eines im wesentlichen allseitig geschlossenen im wesentlichen rohrförmigen Gehäuse, insbesondere eines Ventilgehäuses, welches mindestens zwei lösbar miteinander verbundene Gehäuseteile (40, 42) aufweist, dadurch gekennzeichnet, daß aus einem im wesentlichen hülsenförmigen Rohling (20) durch Innenhochdruck-Umformung ein Zwischenprodukt (10) erzeugt wird, welches in einem ersten Abschnitt der Form des ersten Gehäuseteiles (40) und in einem zweiten Abschnitt der Form des zweiten Gehäuseteiles (42) entspricht, und daß das Zwischenprodukt (10) an einer zwischen diesen beiden Abschnitten liegenden Trennfläche (T) durchgeschnitten wird, wobei die sich so ergebenden Gehäuseteile derart weiterbearbeitet werden, daß sie lösbar miteinander verbindbar sind.

2. Verfahren nach Anspruch 1, dadurch gekennzeichnet, daß der Trennfläche (T) benachbarte Verbindungsabschnitte (24, 32) der beiden Abschnitte des Zwischenproduktes (10) unterschiedlichen Durchmesser aufweisen und über eine Schulter (34) verbunden sind, die beim Durchschneiden des Zwischenproduktes (10) vollständig entfernt wird.

3. Verfahren nach Anspruch 2, dadurch gekennzeichnet, daß der Außendurchmesser des kleineren Durchmesser aufweisenden Verbindungsabschnittes (24) im wesentlichen mit dem Außendurchmesser eines vorgegebenen Verbindungsgewindes (36, 38) übereinstimmt und der Innendurchmesser des großen Durchmesser aufweisenden Verbindungsabschnittes (32) im wesentlichen mit dem Kerndurchmesser des vorgegebenen Verbindungsgewindes (36, 38) übereinstimmt.

4. Verfahren nach einem der Ansprüche 1 bis 3, dadurch gekennzeichnet, daß die Wandstärke des Zwischenproduktes mehr als 3 mm beträgt.

5. Verfahren nach Anspruch 4, dadurch gekennzeichnet, daß die Wandstärke des Zwischenproduktes weniger als 25 mm beträgt.

6. Verfahren nach Anspruch 5, dadurch gekennzeichnet, daß die Wandstärke des Zwischenproduktes zwischen 5 und 7 mm beträgt.

## Claims

1. A process for producing a substantially tubular housing substantially closed on all sides, particularly a valve housing, which has at least two housing parts (40, 42) detachably connected together, characterised in that an intermediate product (10) which corresponds to the form of the first housing part (40) in a first section and to the form of the second housing part (42) in a second section is produced by internal high-pressure forming from a substantially sleeve-shaped blank (20) and in that the intermediate product (10) is cut through at a separating surface (T) lying between these two sections, the housing parts thus obtained being then machined such that they are adapted to be releasably connected.

2. A process according to claim 1, characterised in that connection sections (24, 32), adjacent to the separating surface (T), of the two sections of the intermediate product (10) have different diameters and are connected via a shoulder (34) which is completely removed when the intermediate product (10) is cut through.

3. A process according to claim 2, characterised in that the external diameter of the connection section (24) having a smaller diameter substantially coincides with the external diameter of a given connection thread (36, 38) and the internal diameter of the connection section (32) having a large diameter substantially coincides with the core diameter of the given connection thread (36, 38).

4. A process according to one of claims 1 to 3, characterised in that the wall thickness of the intermediate product is more than 3 mm.

5. A process according to claim 4, characterised in that the wall thickness of the intermediate product is less than 25 mm.

6. A process according to claim 5, characterised in that the wall thickness of the intermediate product is between 5 and 7 mm.

## Revendications

1. Procédé de production d'un corps sensiblement tubulaire et essentiellement fermé de tous côtés, en particulier d'un corps de soupape, qui présente au moins deux parties de corps (40, 42) reliées ensemble de façon détachable, caractérisé en ce que, à partir d'une ébauche (20) essentiellement en forme de douille, on forme, au moyen d'une déformation par haute pression interne, un demi-produit (10) qui, dans un premier segment, correspond à la forme de la première partie de corps (40) et, dans un second segment, à la forme de la seconde partie de corps (42), et que l'on coupe le demi-produit (10) au droit d'une surface de séparation (T) située entre ces deux segments, les deux parties de corps, ainsi obtenues, étant soumises à un usinage consécutif tel qu'elles peuvent ensuite être reliées ensemble de façon détachable.

2. Procédé selon la revendication 1, caractérisé en ce que des segments d'assemblage (24, 32) adjacents à la surface de séparation (T) et faisant partie des deux segments mentionnés du demi-produit (10), ont des diamètres différents et sont reliés entre eux par l'intermédiaire d'un épaulement (34) qui est enlevé complètement lors de la coupe du demi-produit (10).

3. Procédé selon la revendication 2, caractérisé en ce que le diamètre extérieur du segment d'assemblage (24) ayant le plus petit diamètre, est essentiellement égal au diamètre extérieur d'un filetage d'assemblage (36, 38) prédéterminé, et le diamètre intérieur du segment d'assemblage (32) ayant le plus grand diamètre, est essentiellement égal au diamètre du noyau du filetage d'assemblage (36, 38) prédétermine.

4. Procédé selon une des revendications 1 à 3, caractérisé en ce que l'épaisseur de paroi du demi-produit dépasse 3 mm.

5. Procédé selon la revendication 4, caractérisé en ce que l'épaisseur de paroi du demi-produit est inférieure à 25 mm.

6. Procédé selon la revendication 5, caractérisé en ce que l'épaisseur de paroi du demi-produit est comprise entre 5 et 7 mm.
